# EUROPEAN PATENT APPLICATION

(11) **EP 2 246 843 A2**
(43) Date of publication of application: **03.11.2010**
(21) Application number: 10008706.3
(22) Date of filing: 06.12.2007
(51) Int. Cl.: G09G 5/24, G06F 3/14, G09G 5/00, G09G 5/30, G09G 5/36, H04L 9/10

(54) **Electronic device and information processing device**

(30) Priority: 12.12.2006 JP 2006334530; 20.08.2007 JP 2007213647
(62) Divisional of application: 07850158.2
(71) Applicant: National Institute of Information and Communications Technology, Koganei-shi, Tokyo 1848795 (JP)
(72) Inventor: The designation of the inventor has not yet been filed
(74) Representative: Müller-Boré & Partner Patentanwälte

(57) **Abstract**

The present invention relates to an information processing device that performs processing on a file having an information item including image formation information used for forming a display image, the device comprising:
an information moving unit that moves at least a portion of the image formation information included in the information item of the file that is supplied, from the information item to an item included in the file other than the information item or to a predetermined storage location outside the file; and
an information adding unit that adds, to the information item of the file, alternate image formation information that can be processed using software capable of opening the file, in place of the at least a portion of the image formation information that has been moved.

## Description

### Technical Field

The present invention relates to an electronic device, an information processing device, an image modification method and an information processing method, and more particularly to a technique for preventing the leakage of information related to a display image through noise (an electromagnetic signal) unintentionally emitted from an electronic device including a display unit.

### Background Art

It has been long known that electronic devices unintentionally emit weak electromagnetic noise (an electromagnetic signal) during operation. Such an emitted electromagnetic signal contains a signal correlated with an information signal in a device. Recently, technology for acquiring information contained within a device from an observation signal obtained by receiving such an emitted electromagnetic signal has been brought to attention.

This technology for acquiring information within devices by observing an electromagnetic signal emitted from an electronic device and techniques regarding a countermeasure thereof are called "TEMPEST (Transient Electromagnetic Pulse Surveillance Technology)". It has been reported that it is possible with the TEMPEST, for example, to reproduce a monitor display image by observing an electromagnetic signal emitted from an electronic device such as a personal computer (hereinafter, referred to as a "PC").

Therefore, using the TEMPEST allows information related to a display image to be leaked through a signal obtained by receiving an electromagnetic signal unintentionally emitted from an electronic device including a display unit. This poses a serious problem with information security, since personal information and confidential information may be displayed on the display unit of an electronic device. More specifically, when a character or the like is displayed on the display unit of an electronic device such as a PC, that electronic device unintentionally emits an electromagnetic signal containing a display image signal of the display unit. This electromagnetic signal can be observed with a receiver. A display image of the display unit of the electronic device can be reproduced by applying a simple signal processing method to the observation signal. For this reason, the necessity of investigating the problem of information leakage through the emitted electromagnetic signal has been reported (see Non-patent citation 1).

The concern of such display image reproduction applies not only to a display screen of a so-called computer such as a PC, but to all electronic devices including an image display device, including, for example, a mobile phone terminal, a car navigation system, a TV, an ATM (Automated Teller Machine) in a bank or the like, a terminal in a public institution and a ticket machine for a transportation facility or the like.

As set forth above, using the TEMPEST enables reproducing a display screen of an image display device included in an information device in a noncontact manner from a remote place. Accordingly, if personal information, confidential information or the like is displayed on a display screen of a display device, there is a possibility that the display information of that image display device may be stolen. Therefore, it is essential to provide a countermeasure for preventing the leakage of information within a display screen of an image display device due to TEMPEST.

Non-patent citation 1: Hidenori Sekiguchi (and three others), "A study on reproduction of a PC monitor display image using emitted electromagnetic signals", IEICE technical report, The Institute of Electronics, Information and communication Engineers, November 14, 2005, ISEC vol. 2005, No. 97, p. 53-58

### Disclosure of Invention

In view of the foregoing, a problem to be solved by the present invention is to provide an electronic device, an information processing device, an image modification method and an information processing method that can prevent the leakage of information related to a display image through an observation signal of an electromagnetic signal emitted from an electronic device or the like.

An electronic device according to a first aspect of the present invention is an electronic device including: a display unit; a display control unit that forms a display image based on information, and causes the display unit to display the display image; and a modification control unit that performs modification processing on a modification-target image element specified by a character code or vector information included in the information, wherein the display control unit causes the display unit to display the display image after the modification processing has been performed on the modification-target image element by the modification control unit, and the modification processing is processing that performs modification on an outline portion of the modification-target image element, or processing that replaces the modification-target image element with a preprovided modified image element in which the outline portion has been modified.

According to this aspect, a modification-target image element specified by a character code or vector information included in a display image displayed in an electronic device is subjected to modification processing before being displayed on a display unit. In the modification processing, processing that performs modification on an outline portion of the modification-target image element, or processing that replaces the modification-target image element with a preprovided modified image element in which the outline portion has been modified is performed. Furthermore, an image element for which the information leakage through an electromagnetic signal should be prevented may be set as the modification-target image element. Accordingly, it is possible to prevent the leakage of the information related to the display image through electromagnetic noise (electromagnetic signal) when the display image is displayed on the display unit of the electronic device.

In the case where processing that performs modification on an outline portion of the modification-target image element is performed as the modification processing, the modification processing can be performed on an arbitrary image element specified by the character code or the vector information.

In the case where processing that replaces the modification-target image element with a preprovided modified image element in which the outline portion has been modified is performed as the modification processing, the modification processing is completed by simply replacing the image element, and therefore, it is possible to reduce the load on the electronic device applied by the modification processing, and to perform the modification processing speedily.

An electronic device according to a second aspect of the invention is the electronic device of the first aspect, wherein processing that adds at least one modification portion to the outline portion of the modification-target image element, or processing that replaces the modification-target image element with a preprovided modified image element in which at least one modification portion has been added to the outline portion of the display image is performed in the modification processing performed by the modification control unit, and at least one of three attribute values consisting of hue, lightness and chroma of the modification portion is gradually changed from an attribute value corresponding to the image element to which the modification portion is added, to an attribute value corresponding to a background image of the image element.

According to this aspect, at least one modification portion is added to the outline portion of the modification-target image element. Then, at least one of three attribute values consisting of hue, lightness and chroma of the modification portion is gradually changed from an attribute value corresponding to the image element to which the modification portion is added, to an attribute value corresponding to a background image of the image element. Accordingly, it is possible to suppress degradation in the viewability of the modified image element displayed on the display unit of the electronic device, while effectively obscuring the outline portion of the image element such that restoration based on an electromagnetic signal is difficult. As a result, even if an electromagnetic signal emitted from the electronic device in relation to an image signal is received by a third party, it is possible to prevent an image element on which modification processing was performed from being restored based on the received signal.

An electronic device according to a third aspect of the invention is the electronic device of the second aspect, wherein at least one of the three attribute values in the modification portion is gradually changed in a horizontal direction that is the main-scanning direction of the display unit.

According to this aspect, at least one of the three attribute values in the modification portion that has been added to the outline portion of the modified image element is gradually changed in a horizontal direction that is the main-scanning direction of the display unit. Accordingly, it is possible to effectively obscure the part of the image signal that corresponds to the outline portion of the image element such that restoration based on an electromagnetic signal is difficult, thereby more reliably preventing an image element from being restored based on an electromagnetic signal related to the image signal.

An electronic device according to a fourth aspect of the invention is the electronic device of the first aspect, wherein the modification portion is added to the outline portion of the modification-target image element in a plurality of locations, and has a substantially linear form extending along the horizontal direction of the display unit.

According to this aspect, the modification portion that has been added to the outline portion of the modified image element is added to the outline portion of the modification-target image element in a plurality of locations, and has a substantially linear form extending along the horizontal direction of the display unit. Accordingly, it is possible to suppress degradation in the viewability of the modified image element displayed on the display unit of the electronic device, while effectively obscuring the outline portion of the image element such that restoration based on an electromagnetic signal is difficult.

An electronic device according to a fifth aspect of the invention is the electronic device according to the first aspect, wherein the modification-target image element includes a line segment extending in a horizontal direction that is the main-scanning direction of the display unit, processing that provides the line segment with at least one modification portion extending in the horizontal direction, or processing that replaces the line segment with a preprovided modified line segment to which the at least one modification portion has been added is performed in the modification processing performed by the modification control unit, and in a part of the line segment at which the modification portion is provided, at least one of three attribute values consisting of hue, lightness and chroma of the line segment is gradually changed from an attribute value corresponding to a part of the line segment at which the modification portion is not provided, to an attribute value corresponding to a background image of the line segment.

According to this aspect, at least one modification portion extending in the horizontal direction is provided in the modified line segment extending in the horizontal direction. Also, at least one of three attribute values consisting of hue, lightness and chroma of the modification portion is gradually changed from an attribute value corresponding to a part of the line segment at which the modification portion is not provided, to an attribute value corresponding to a background image of the line segment. Accordingly, it is possible to suppress degradation in the viewability of the modified line segment displayed on the display unit of the electronic device, while effectively obscuring the image of the line segment such that restoration based on an electromagnetic signal is difficult. As a result, even if an electromagnetic signal emitted from the electronic device in relation to an image signal is received by a third party, it is possible to prevent a line segment on which modification processing was performed from being restored based on the received signal.

An electronic device according to a sixth aspect of the invention is electronic device according any of to the first to fifth aspects, wherein the modification control unit forms a bitmap image based on the character code or the vector information of the modification-target image element, and performs the modification processing on the bitmap image.

According to this aspect, bitmap data corresponding to the image element that has been subjected to the modification processing by the modification processing is generated, and therefore, it is possible to perform modification processing on an arbitrary image element specified by the character code or the vector information.

An electronic device according to a seventh aspect of the invention is the electronic device of any of the first to fifth aspects, wherein the modification control unit generates a bitmap format image element that has been subjected to the modification processing, based on the vector information of the modification-target image element.

According to this aspect, a bitmap format image element that has been subjected to the modification processing is generated based on the vector information specifying the modification-target image element. Accordingly, it is possible to add the modification portion efficiently and speedily by utilizing the orientation, length or the like of various parts of the image element on the display screen, based on the vector information of the image element. For example, a part of the image element that extends along the main-scanning direction can be known from the vector information, and processing on that part can be facilitated, for example, by omitting the addition of the modification portion for that part.

An electronic device according to an eighth aspect of the invention is the electronic device of any of the first to fifth aspects, wherein the modification-target image element is specified by a character code and data related to a font, data related to at least one type of modified font corresponding to the modified image element is pre-registered in the modification control unit, and the modification control unit replaces the data related to the font of the modification-target image element with the data related to the modified font.

According to this aspect, information related to at least one type of modified font corresponding to the modified image element is pre-registered in the modification control unit of the electronic device. Also, the information related to the font of the modification-target image element is replaced with the information related to the modified font during the modification processing. Accordingly, the modification processing is completed by simply replacing the font, and therefore, it is possible to reduce the load on the electronic device applied by the modification processing, and to perform the modification processing speedily.

An electronic device according to a ninth aspect of the invention is the electronic device of the eighth aspect, wherein information related to a plurality of types of modified fonts corresponding to font types of the modified image element is pre-registered in the modification control unit in association with the font types of the modification-target image element, and the modification control unit selects from among the plurality of types of modified fonts, a modified font associated with the font type of the modification-target image element, and replaces the data related to the font of the modification-target image element with data related to the selected modified font.

According to this aspect, a plurality of types of modified fonts are provided in advance, and the plurality of types of modified fonts are appropriately used depending on the font type of the modification-target image element. Accordingly, the same or similar font as the font type of the image element before modification can be used as the modified font used for the modified image element, and therefore, it is possible to avoid an inconvenience such as the font of the image element being changed to a completely different font by the modification processing.

An electronic device according to a tenth aspect of the invention is the electronic device of any of the first to ninth aspects, wherein the modification-target image element includes a cursor image.

According to this aspect, modification processing is also performed on a cursor image, and therefore, it is possible to prevent the position, movement, and the like of the cursor displayed on the display unit from being detected by a third party based on an electromagnetic signal emitted from the electronic device.

An electronic device according to an eleventh aspect of the invention is the electronic device of the tenth aspect, wherein the cursor image is a mouse cursor image.

According to this aspect, it is possible to prevent the position, movement, and the like of the mouse cursor displayed on the display unit from being detected by a third party based on an electromagnetic signal emitted from the electronic device.

According to a twelfth aspect of the invention, there is provided an image modification method for modifying a display image displayed on a display unit of an electronic device, the method including the steps of: performing modification processing on a modification-target image element specified by a character code or vector information included in a display image that is formed based on information; and causing the display unit to display the display image after the modification processing has been performed on the modification-target image element, wherein the modification processing is processing that performs modification on an outline portion of the modification-target image element, or processing that replaces the modification-target image element with a preprovided modified image element in which the outline portion has been modified.

According to this aspect, it is possible to achieve substantially the same effect as the first aspect.

According to a thirteenth aspect of the invention, there is provided an information processing device that performs processing on a file having an information item including image formation information used for forming a display image, the device including: an information moving unit that moves at least a portion of the image formation information included in the information item of the file that is supplied, from the information item to an item included in the file other than the information item or to a predetermined storage location outside the file; and an information adding unit that adds, to the information item of the file, alternate image formation information that can be processed using software capable of opening the file, in place of the at least a portion of the image formation information that has been moved.

According to this aspect, when confidential information or the like is included in the image formation information included in the document information item of the file, a portion of the image formation information that corresponds to the confidential information, or the entire image formation information can be moved to an item in the file that is other than the information item or to a predetermined storage location outside the file. Accordingly, when the file is loaded to another electronic device and is displayed thereby, it is possible to prevent the leakage of information to a third party through an electromagnetic signal as a result of a display image including confidential information being displayed on the display unit in a vulnerable state.

Furthermore, when the image formation information has been moved from the information item of the file, the alternate image formation information that can be processed with software capable of opening that file is added to that information item. Also, in the electronic device or the like to which the file has been read, an alternate display image that has been formed based on the alternate image formation information is displayed on the display unit. Accordingly, it is possible to convey various information to the user and the like of the electronic device by using the alternate display image. For example, it is possible to inform the user of the electronic device of the fact that the content of the file has been changed, or of a method of safely displaying the information contained in the file before changing, while protecting that information from leakage, or the like.

The alternate image formation information that is added to the document information item of the file in place of the moved image formation information is information that can be processed with software capable of opening the file. Accordingly, special software need not be provided for opening the file to which the alternate image formation information has been added, which is convenient.

The information processing device according to a fourteenth aspect of the invention is the information processing device of the thirteenth aspect, wherein the alternate image formation information includes information for causing an electronic device in which the software is installed to display a predetermined message image when the file is opened by the electronic device.

According to this aspect, it is possible to convey various messages to the user and the like of the electronic device by using the message image that has been formed based on the original image formation information. For example, it is possible to inform the user of the fact that the content of the file has been changed, or of a method of safely displaying the display image that has been formed based on the alternate image formation information, while protecting that information from leakage, or the like.

The information processing device according to a fifteenth aspect of the invention is the information processing device of the thirteenth aspect, further including: a modification processing unit that performs modification processing on a modification-target image element specified by a character code or vector information included in the image formation information, wherein the modification processing is processing that performs modification on an outline portion of the modification-target image element, or processing that replaces the modification-target image element with a preprovided modified image element in which the outline portion has been modified, and the information adding unit adds, to the information item of the file, modified information obtained by the modification processing performed on the modification-target image element by the modification processing unit as the alternate image formation information.

According to this aspect, modification processing is performed on a modification-target image element specified by a character code or vector information included in the image formation information included in the information item of the file. In the modification processing, processing that performs modification on an outline portion of the modification-target image element, or processing that replaces the modification-target image element with a preprovided modified image element in which the outline portion has been modified is performed. Furthermore, an image element for which the information leakage through an electromagnetic signal should be prevented may be set as the modification-target image element. Accordingly, it is possible to prevent the leakage of the information related to the display image through electromagnetic noise (electromagnetic signal) when the display image is displayed on the display unit of the electronic device. Accordingly, when the file is loaded to another electronic device and is displayed thereby, it is possible to prevent the leakage of information to a third party through an electromagnetic signal as a result of a display image including confidential information being displayed on the display unit in a vulnerable state.

In the case where processing that performs modification on an outline portion of the modification-target image element is performed as the modification processing, the modification processing can be performed on an arbitrary image element specified by the character code or the vector information.

In the case where processing that replaces the modification-target image element with a preprovided modified image element in which the outline portion has been modified is performed as the modification processing, the modification processing is completed by simply replacing the image element, and therefore, it is possible to reduce the load on the information processing device applied by the modification processing, and to perform the modification processing speedily.

An information processing according to a sixteen aspect of the present invention is the information processing according to the thirteenth to fifteenth aspects, further including: a cryptographic processing unit that performs encryption of information, wherein the information moving unit causes the cryptographic processing unit to perform encryption on at least a portion of a part of the image formation information that is targeted for movement before moving the part of the image formation information that is targeted for movement, from the information item to an item in the file that is other than the information item or to a predetermined storage location outside the file.

According to this aspect, encryption is performed on at least a portion of a part of the image formation information that is targeted for movement. Then, the part of the image formation information that is targeted for movement is moved from the information item to an item in the file that is other than the information item or to a predetermined storage location outside the file. Accordingly, it is possible to prevent the leakage of confidential information or the like included in image formation information as a result of image formation information targeted for movement being intercepted by a third party.

An information processing device according to a seventeenth aspect of the present invention is the information processing device according to any of the thirteenth to sixteenth aspects, wherein information included in the file is structured.

According to this aspect, information included in the file is structured, and therefore, it is possible to include various information in the file, and allow various processing to be performed by the computer based on the information included in the file.

According to an eighteenth aspect of the present invention, there is provided an information processing method for performing processing on a file having an information item including image formation information used for forming a display image, the method including the steps of moving at least a portion of the image formation information included in the information item of the file that is supplied, from the information item to an item in the file other than the information item or to a predetermined storage location outside the file; and adding to the information item of the file, pre-defined alternate image formation information that can be processed using software capable of opening the file, in place of the at least a portion of the image formation information that has been moved.

According to this aspect, it is possible to achieve substantially the same effect as the thirteenth aspect.

According to a nineteenth aspect of the present invention, there is provided an image modification method for performing alteration on an information image in an electronic device including an image display device such that an electromagnetic signal correlated with the information image included in a display image displayed on a display screen of the image display device will not be emitted, wherein a modification portion is added to an outline portion of the information image as the alteration.

According to this aspect, a modification portion is added to an outline portion of the information image such that an electromagnetic signal correlated with the information image included in a display image displayed in the electronic device will not be generated. Accordingly, an image can be easily modified by simply adding the modification portion without modifying the image itself, and therefore, it is possible to prevent an information image in the display screen from being estimated based on an observation signal of an electromagnetic signal emitted from the electronic device. According to Non-patent citation 1, an electromagnetic signal containing display image information of an image display device that is emitted from an electronic device is correlated with a change is voltage value of the display image, and the voltage value of the display image is correlated with the color in the display image. That is, controlling the color change in the display image enables reducing the emitted electromagnetic signal containing the display image information. Accordingly, it is possible to prevent the leakage of information included in a display image through an electromagnetic signal emitted from the electronic device.

An image modification method according to a twentieth aspect of the present invention is the image modification method according to the nineteenth aspect, wherein the modification portion is a linear gradation portion connecting a color of the information image and a background image color.

According to this aspect, the modification portion is a linear gradation portion connecting a color of the information image and a background image color. Accordingly, the linearity enables performing calculation processing with just a linear function, and therefore, it is possible to perform the calculation processing at high speed without the need for special hardware or the like for calculation, thereby realizing real-time image modification. At the same time, it is possible to reduce the voltage value change of an image signal used for transmitting laterally adjacent dots (pixels) of an information image and a background image (e.g., an RGB signal) or an image signal handled inside the electronic device, thereby reliably reducing an emitted electromagnetic signal resulting from the voltage value change. Accordingly, it is possible to reduce an emitted electromagnetic signal resulting from a contrast change (voltage value change of an image signal or the like) in the display screen to smaller than the ambient noise in the event of observation of the emitted electromagnetic signal, thereby preventing the restoration of an image in the display screen based on an observation signal of the emitted electromagnetic signal and the leakage of the information of that image.

An image modification method according to a twenty-first aspect of the present invention is the image modification method according to the nineteenth or twentieth aspect, wherein the modification portion is added on at least one of both sides in the horizontal direction of the outline portion of the information image, with or without a predetermined gap in the vertical direction.

According to this aspect, the modification portion is added on at least one of both sides in the horizontal direction of the outline portion of the information image, with or without a predetermined gap in the vertical direction. Accordingly, in the case where the modification portions are added with a predetermined gap in the vertical direction, the area to which the modification portions are added is limited, as a result of which the amount of image processing can be reduced. In the case where the modification portions are added without a gap, the electromagnetic signal can be reduced more reliably than in the case where the modification portions are added with a gap.

An image modification method according to a twenty-second aspect of the present invention is the image modification method according to the twentieth aspect, wherein a horizontal direction width of the gradation portion in the modification portion is changed.

According to this aspect, a horizontal direction width of the gradation portion in the modification portion is changed. Accordingly, it is possible to change the gradation change rate, thereby adjusting the balance between the effect of suppressing information leakage and the viewability of the image element.

Note that the following configurations may be employed as other aspects of the present invention.

An electromagnetic signal reduction method for performing alteration on an information image in an electronic device including an image display device such that an electromagnetic signal correlated with the information image included in a display image displayed on a display screen of the image display device will not be emitted, wherein a modification portion is added to an outline portion of the information image as the alteration.

In the electromagnetic signal reduction method, the modification portion is a linear gradation portion connecting a color of the information image and a background image color.

In the electromagnetic signal reduction method, the modification portion is added on at least one side in a left-and-right horizontal direction of the outline portion of the information image, with or without a predetermined gap in an up-and-down vertical direction of the outline portion.

In the electromagnetic signal reduction method, a left-and-right horizontal direction width of the gradation portion connecting a color of the information image and a background image color in the modification portion is changed.

A method for modifying an image displayed on a display screen of an electronic device, wherein when an existing image displayed on the display screen is modified and displayed, a newly provided second API hooks the original application program interface (original API) provided in the electronic device, and the second API forms a modified image by applying pre-described image modification information and displays the modified image, whereupon control returns to the original API.

After the original API has created a display bitmap character (font) based on the existing character (font) image, the second API alters the bitmap character (font).

Based on vector information of an existing outline character (font), the second API creates a bitmap in which the aforementioned existing character (font) image has been altered.

When the existing (character) font image includes a line segment that is parallel to the scanning line, the character (font) image of the line segment is modified.

A file reception method for receiving and displaying a file described with an image modified in an electronic device at the transmitting end, wherein in an item of a program specifying a file that is displayed with a modified image in which an existing image has been modified, information of an image that is displayed is not described in an item for describing the information, but rather the information has been moved to another location, and only information for displaying the modified image is described in the item.

At least one of the information of the display image that has been moved to the other location and meta-information related to that information is encrypted.

The information of the display image and information for displaying a message for displaying the modified image are described in separate items. When the file is opened in a computer that has received the file, an indication that the file is described with a modified image and a message for displaying the modified image are displayed on the display screen. Also, additional software for displaying the modified image according to the message is downloaded, and the content of the file is displayed with the modified image using the additional software.

The above file is a structured file.

A modified image file transmission/reception method for transmitting/receiving a file described with a modified image, wherein when an existing image displayed on a display screen of an electronic device at the transmitting end is modified and displayed, a newly provided second API hooks the original application program interface (original API) stored in the electronic device, and the second API forms a modified image by applying pre-described image modification information, displays the modified image, and then returns the control to the original API, whereupon the electronic device transmits a file described with the modified image. An electronic device at the receiving end receives the file. In an item of a program specifying the file, information of an image that is displayed is not described in an item for describing the information, but rather the information has been moved to another location, and only information for displaying the modified image is described in the item.

Objects, features, aspects, and advantages of this invention will be more apparent from the following detailed description and the accompanying drawings.

### Brief Description of Drawings

FIG. 1 is a block diagram of an electronic device according to a first embodiment of the present invention.
FIG. 2 is a diagram showing an example of a display image displayed on a display unit of the electronic device of FIG. 1.
FIG. 3(a) is a diagram showing an example of an image element targeted for modification processing, and FIG. 3(b) is a diagram showing a state of the image element after the modification processing.
FIG. 4 is an enlarged view of the lower portion of FIG. 3(b).
FIG. 5(a) is a diagram showing one line-worth of an RGB signal along a horizontal line 8 in FIG. 3(a), and FIG. 5(b) is a diagram showing one line-worth of an RGB signal along a horizontal line 9 in FIG. 3(b).
FIG. 6(a) is a diagram showing the results of measuring an electromagnetic signal emitted due to the RGB signal in FIG. 5(a), and FIG. 6(b) is a diagram showing the results of measuring an electromagnetic signal emitted due to the RGB signal in FIG. 5(b).
FIG. 7 shows schematic diagrams illustrating cases in which the horizontal width of the area on which gradation is performed has been changed, where FIG. 7(a) shows a case in which the aforementioned width is narrow, and FIG. 7(b) shows a case in which the aforementioned width is wide.
FIG. 8(a) is a diagram showing an image of a line segment before modification, and FIG. 8(b) is a diagram showing an image of the line segment after modification.
FIG. 9 is a schematic diagram for illustrating a method of adding modification portions with use of vector information.
FIG. 10 is a diagram showing another example of a display image displayed on the display unit of the electronic device shown in FIG. 1.
FIG. 11 is a diagram showing an example of a cursor image to which modification portions have been added.
FIG. 12 is a flowchart illustrating operations of the electronic device shown in FIG. 1.
FIG. 13 is a flowchart illustrating the details of operations related to modification processing performed by the electronic device shown in FIG. 1.
FIG. 14 is a diagram showing yet another example of a display image displayed on the display unit of the electronic device shown in FIG. 1.
FIG. 15 is a diagram illustrating an information processing device according to a second embodiment of the present invention.
FIG. 16 is a block diagram of the information processing device shown in FIG. 15.
FIG. 17 is a flowchart illustrating operations of the information processing device shown in FIG. 15.
FIG. 18 is a diagram schematically showing the content of a file before changing.
FIG. 19 is a diagram showing an example of an image that is displayed based on the information included in the file shown in FIG. 18.
FIG. 20 is a diagram showing a first exemplary change to the file shown in FIG. 18.
FIG. 21 is a diagram showing an example of an image that is displayed based on information contained in the file shown in FIG. 20.
FIG. 22 is a diagram showing an image after modification processing that is displayed in place of the image shown in FIG. 19.
FIG. 23 is a diagram showing a second exemplary change to the file shown in FIG. 18.
FIG. 24 is a block diagram showing a first variation of the information processing device shown in FIG. 16.
FIG. 25 is a block diagram showing a second variation of the information processing device shown in FIG. 16.

### Description of the Invention

### First Embodiment

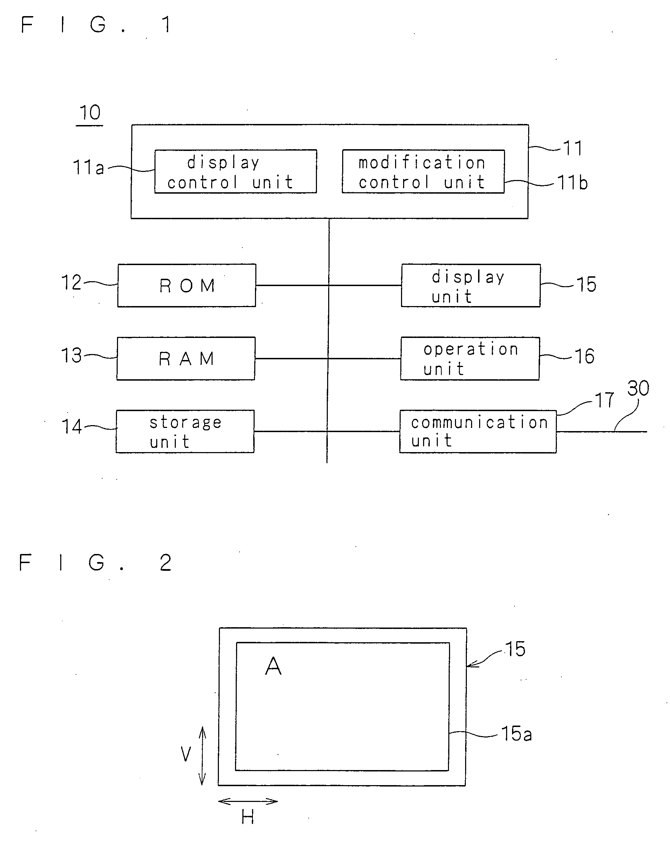

FIG. 1 is a block diagram of an electronic device according to a first embodiment of the present invention. As shown in FIG. 1, an electronic device 10 includes a control unit 11, a ROM (Read Only Memory) 12, a RAM (Random Access Memory) 13, a storage unit 14, a display unit 15, an operation unit 16, and a communication unit 17. A technique according to an image modification method of the present invention has also been applied to the electronic device 10.

An arbitrary information terminal can be used as the electronic device 10 as long as the information terminal includes the display unit 15 and can be connected to a network 30. Specific examples include a PC, a mobile phone terminal, a PDA (Personal Digital Assistant), a car navigation system, and a TV Another example is an ATM installed in a convenience store, the branch of a bank, or the like. The network 30 is configured from, for example, a wide-area network such as the Internet, a LAN (Local Area Network), or a combination thereof.

The control unit 11 performs overall control of the electronic device 10, and has a configuration including a CPU (Central Processing Unit) and the like. The control unit 21 includes a display control unit 11a and a modification control unit 11b as functional elements. The roles of these functional elements are described later. Note that the functional elements included in the control unit 11 refer to functions that are realized by one or more pieces of software that have been read to the control unit 11.

The ROM 12 stores, for example, setting data and a basic program that the control unit 11 executes in order to perform information processing. The RAM 13 is used as, for example, a work area in order for the control unit 11 to perform information processing. The storage unit 14 is configured from a storage device whose storage content can be rewritten, such as a hard disk device or a high-capacity semiconductor memory, and is used as an information storage location. The storage unit 14 stores information related to an operating system and various types of application software. The display unit 15 is configured from a liquid crystal display apparatus or the like and displays an image based on an image signal. The operation unit 16 is configured from a keyboard, a mouse, and the like, and accepts an operation from a user. The communication unit 17 is an interface in order for the electronic device 10 to transmit/receive information via the network 30.

The display control unit 11a of the control unit 11 forms a display image based on information for forming a supplied image (image formation information), and causes the display unit 15 to display the display image. Examples of image formation information include later-described information read from the storage unit 14, information read from various types of recording media (e.g., a compact disk or a removable semiconductor memory device) via an information reading unit that is not shown, information fetched via the network 30, and information input from the operation unit 16.

The modification control unit 11b performs modification processing on a modification-target image element that is specified by vector information or a character code included in image formation information used by the display control unit 11a to form a display image. The modification-target image element corresponds to an information image of the present invention.

The display control unit 11a also causes the display unit 15 to display the display image after the modification processing has been performed on the modification-target image element by the modification control unit 11b. Here, one example of modification processing is processing that modifies the outline portion of a modification-target image element. Such modification processing is performed in order to prevent the leakage of information related to a display image by electromagnetic wave noise (an electromagnetic signal) when the display image is displayed on the display unit 15. Note that in a display image that the display control unit 11a causes the display unit 15 to display, image elements that are not targets of modification are displayed on the display unit 15 as-is, without modification processing being performed thereon.

The following is a more detailed description of modification processing. The following description takes the example of a case in which a character 1, which is "A" as specified by a character code as shown in FIG. 2, is displayed on the display unit 15.

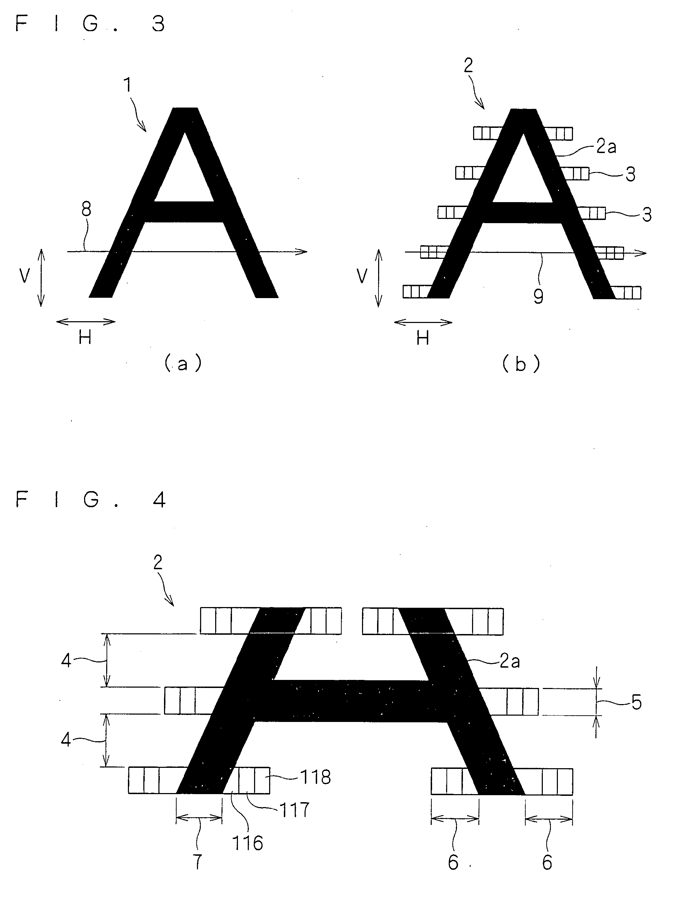

FIG. 3(a) is a diagram showing an image of the character 1 "A", which is an example of an image element targeted for modification processing, and FIG. 3(b) is a diagram showing an image of the character 1 after modification processing. FIG. 4 is a diagram showing an enlarged view of the bottom portion of FIG. 3(b). Note that after modification processing has been performed on the image of the character 1 that is targeted for modification, the character 1 is displayed on the display unit 15 as the image of a modified character 2, and therefore the image of the character 1 shown in FIG. 3(a) will not be displayed on the display unit 15.

In the present invention, the entire image displayed on a display screen 15a of the display unit 15 is referred to as the display image. In the display image, modification processing is performed on modification-target image elements specified by a character code or vector information. Also, the portion of the display image that is the background of a modification-target image element is called a background image. An image element specified by a character code is a concept including all image elements, such as characters, symbols, and graphics that have been assigned a character code. Specific examples thereof include kanji, hiragana, katakana, numbers, alphabet letters, Roman characters, and character used in other languages. An image element specified by vector information is a concept including all image elements, such as characters, symbols, and graphics that are described as vector information. In the present invention, an arbitrary image element specified by a character code or vector information can be made a target of modification processing according to the necessity of an information leakage countermeasure. For example, modification processing is not limited to be applied to still images, but rather may be applied to video as well.

The image of the character 1 shown in FIG. 3(a) is displayed as one character of a font generally used in the display screen of a PC or the like. For example, the character 1 is black, and the background in the image of the character 1 is white. The image of the modified character 2 shown in FIG. 3(b) is the same as the image of the character 1 except that a plurality of modification portions 3 ("whiskers") have been added due to modification processing. Note that a portion 2a excluding the modification portions 3 in the image of the modified character 2 (the main body portion of the image of the character 2) is black.

Each modification portion 3 extends linearly along the horizontal direction H, beginning from at least one side (e.g., both sides) in the horizontal direction H of the outline portion of the main body portion 2a of the character 2. Here, the horizontal direction H refers to a direction parallel to the main-scanning direction of the display screen 15a of the display unit 15. Note that the orientation of the horizontal direction H changes according to the installation state of the display unit 15. For example, when the display unit 15 is installed in the normal orientation as shown in FIG. 2, the horizontal direction H is a left-and-right direction (lateral direction) as seen by a viewer. However, when the display unit 15 is arranged in a state of being rotated 90 degrees from the state shown in FIG. 2, the horizontal direction H is an up-and-down direction (longitudinal direction) as seen by the viewer.

Also, the modification portions 3 are added at a plurality of locations with gaps therebetween in the vertical direction V of the outline portion of the main body portion 2a of the character 2. Here, the vertical direction V refers to a direction parallel to the sub-scanning direction of the display screen 15a of the display unit 15. Note that as a variation, the modification portions 3 may be added without gaps therebetween in the vertical direction V of the outline portion of the main body portion 2a of the character 2.

Also, as shown in FIG. 4, a width 6 of the modification portions 3 along the horizontal direction 6, a width 5 of the modification portions 3 along the vertical direction V, and a gap 4 between modification portions 3 along the vertical direction V can be freely and independently changed by changing the setting data.

Also, each modification portion 3 is divided into a first gray area 116, a second gray area 117, and a third gray area 118 in the stated order beginning at the side of the modification portion 3 that is closest to the main body portion 2a of the image of the modified character 2. The first gray area 116 is displayed using the darkest gray, the third gray area 118 is displayed using the lightest gray, and the second gray area 117 is displayed using a gray that is between the first gray area 116 and the third gray area 118. In this way, with increasing distance from the main body portion 2a in the horizontal direction H, at least one attribute value (e.g., lightness) among the three attribute values of a hue, a chroma, and a lightness in the Munsell color system changes in stages in each modification portion 3. As a result, a gradation is formed in each modification portion 3. In other words, the modification portions 3 can also be called gradation portions. In the present invention, "gradation" refers to an expression in which one of two different lightnesses (colors) is set as one end, the other of the lightnesses (colors) is set as the other end, and lightnesses (colors) between these two ends change in stages. The change in the gradation becomes increasingly smooth with an increase in the number of changes per number of unit pixels on the screen when the lightnesses (colors) change in stages. Note that gradation in the modification portions 3 may be performed by changing, in stages, any one of the above-described three attributes values other than lightness, or any two or all of the three attribute values.

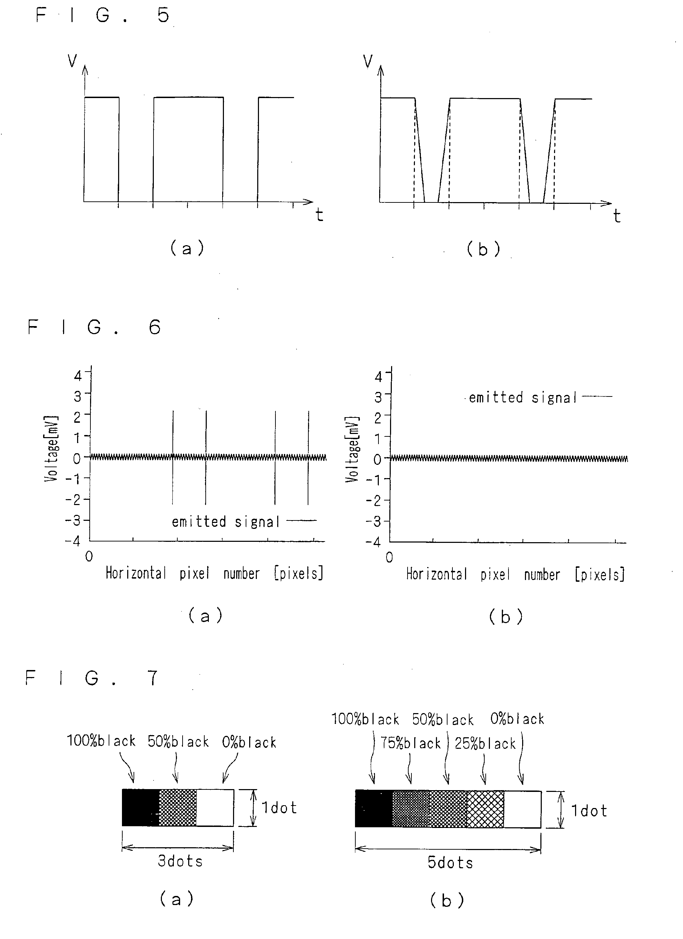

FIG. 5(a) is a diagram showing one line-worth of an RGB signal along a horizontal line 8 in FIG. 5(a), and FIG. 5(b) is a diagram showing one line-worth of an RGB signal along a horizontal line 9 in FIG. 3(b). In FIGS. 5(a) and 5(b), the horizontal axis indicates elapsed time, and the vertical axis indicates voltage values.

The horizontal line 8 in FIG. 3(a) is a line that runs through the background image portion (the white portion) and the image of the character 1 (the black portion). For this reason, in FIG. 5(a) that shows the results of measuring the RGB signal along the line 8, low voltage values of the RGB signal correspond to black portions, and high voltage values correspond to white portions.

The horizontal line 9 in FIG. 3(b) is a line that runs through the background image portion (white portion), the main body portion 2a of the image of the character 2, and the modification portions 3. For this reason, in FIG. 5(b) that shows the results of measuring the RGB signal along the line 9, the lowest voltage values of the RGB signal correspond to black portions, the second lowest voltage values correspond to the first gray areas 116, the intermediate voltage values correspond to the second gray areas 117, the second highest voltage values correspond to the third gray areas 118, and the highest voltage values correspond to white portions.

FIG. 6(a) is a diagram showing the results of measuring an electromagnetic signal emitted due to the RGB signal in FIG. 5(a), and FIG. 6(b) is a diagram showing the results of measuring an electromagnetic signal emitted due to the RGB signal in FIG. 5(b). In FIGS. 6(a) and 6(b), the horizontal axis indicates the number of pixels on the horizontal lines 8 and 9 in the display screen, and the vertical axis indicates voltage values of the emitted electromagnetic signals.

In FIG. 6(a), voltage values of the emitted electromagnetic signal that exceed 1 mV correspond to borders between low and high voltage values of the RGB signal in FIG. 3(a), that is to say, borders between black and white portions.

In contrast, the electromagnetic signal having a voltage value exceeding 1 mV is not emitted in FIG. 6(b). In other words, if the change in lightnesses in the image from a white portion to a black portion is smooth as shown in FIG. 3(b), the electromagnetic signal having voltage values that exceed 1 mV as shown in FIG. 6(a) is reduced to an unobservable extent as shown in FIG. 6(b).

In this way, if the electromagnetic signal emitted based on an image signal corresponding to outline portions in the modified character 2 is reduced to a nearly unobservable level, it is impossible to restore the image of the character 2 based on the results of measuring the emitted electromagnetic signal. As a result, it is possible to prevent the leakage of information related to the character 2 by the electromagnetic signal emitted based on the image signal of the character 2.

Accordingly, performing modification processing such as is described above on a modification-target image element enables reliably preventing the leakage of information related to the image element by the electromagnetic signal emitted based on the image signal of the image element.

Here, gradation performed in the modification portions 3 described above is preferably a rectilinear (in other words, a linear) change in a plurality of stages. When the gradation changes linearly in this way, calculation processing can be performed with just a linear function, as a result of which the processing amount is relatively low, calculation processing is accelerated, and a large number of image elements can be modified speedily. Also, suppressing the amount of calculation processing enables implementing modification processing by only software, even if special additional hardware and the like for calculation processing is not included. Therefore, a special apparatus is not necessary, and modification processing can be performed by various types of information processing devices.

FIG. 7 shows schematic diagrams illustrating cases in which the horizontal width of the area on which gradation is performed has been changed, where FIG. 7(a) shows a case in which the aforementioned width is narrow and FIG. 7(b) shows a case in which the aforementioned width is wide. The description below takes the example of a case in which the modification-target image element is 100% black, and the background image is 0% black (white). In FIG. 7(a), a gradation is performed by inserting one intermediate level dot between a 100% black dot and a 0% black dot. Also, in FIG. 7(a), a gradation is performed by inserting three intermediate level dots that change in stages between a 100% black dot and a 0% black dot. As shown in FIG. 7(a), when the gradation change rate is high at 50%, the horizontal width of the area on which gradation is performed is narrow. In contrast, when the gradation change rate is low at 25% as shown in FIG. 7(b), the horizontal width of the area on which gradation is performed is wide.

In this way, changing the horizontal width of the modification portions 3 on which gradation is performed enables changing the gradation change rate. As a result, it is possible to adjust the balance between the viewability of the image element and the difficulty in interception by the electromagnetic signal of the image element after modification processing. Specifically, when the gradation change rate is lowered by increasing the horizontal width of the modification portions 3, the difficulty of interception increases, but viewability as an image decreases. On the other hand, when the gradation change rate is increased by decreasing the width, viewability increases, but interception becomes easier.

Also, the modification portions 3 may be formed so that the modification-target image elements and the background image in a display image are connected by a gradation having a constant change rate. In this case, the horizontal width of the modification portions 3 increases according to the magnitude of the contrast and the like of the modification-target image elements and the background image. For example, in the case of the image of a character being displayed in the display screen, if the horizontal width of the modification portions 3 increases, there are cases in which modification portions 3 overlap each other between adjacent characters. In such a case, it is sufficient to add the modification portions 3 after having lowered the contrast and the like between the characters and the background in advance. One example of a method for reducing the difference between the lightness of the background image and a modification-target image element such as a character is a method in which, if the character is 100% black and the background is 0% black (white), the contrast of the character and the background is lowered by changing the character to a gray color that is 50% black.

Note that the method of modifying (altering) an image element such as a character is not limited to a method of adding a modification portion (whiskers) as long as the emitted electromagnetic signal can be reduced to a nearly unobservable extent. For example, modification portions may be added so as to completely encompass the periphery of the main body portion (non-altered portion) of the modification-target image element, or so as to partially surround the periphery of the main body portion. Compared to the method of adding whisker-like modification portions, this method more reliably reduces the emitted electromagnetic signal and makes it even more difficult for the image to be estimated.

It is also possible to, for example, further add a plurality of dots in the periphery of the whisker-like modification portions 3 described above. This obtains an even higher visual deception effect and enables making estimating the image even more difficult.

This completes the description of the method for preventing an image displayed on a screen from being estimated, by reducing the electromagnetic signal emitted based on the image signal. However, reducing the electromagnetic signal is not necessarily required, as long as the result of making it impossible to estimate an image displayed on a screen is obtained.

The whisker-like modification portions 3 described above may be configured from one color or a plurality of different colors such as red, yellow, blue, red, and green. In this case, the color of each modification portion 3 may be changed randomly. Alternatively, the modification portions 3 may be configured from only a single intermediate lightness (e.g., a gray color that is 70% black). In this case, the lightness of each modification portion 3 may be changed randomly, such as setting the lightness of a certain modification portion 3 to a gray color that is 70% black, and setting the lightness of another modification portion 3 to a gray color that is 30% black.

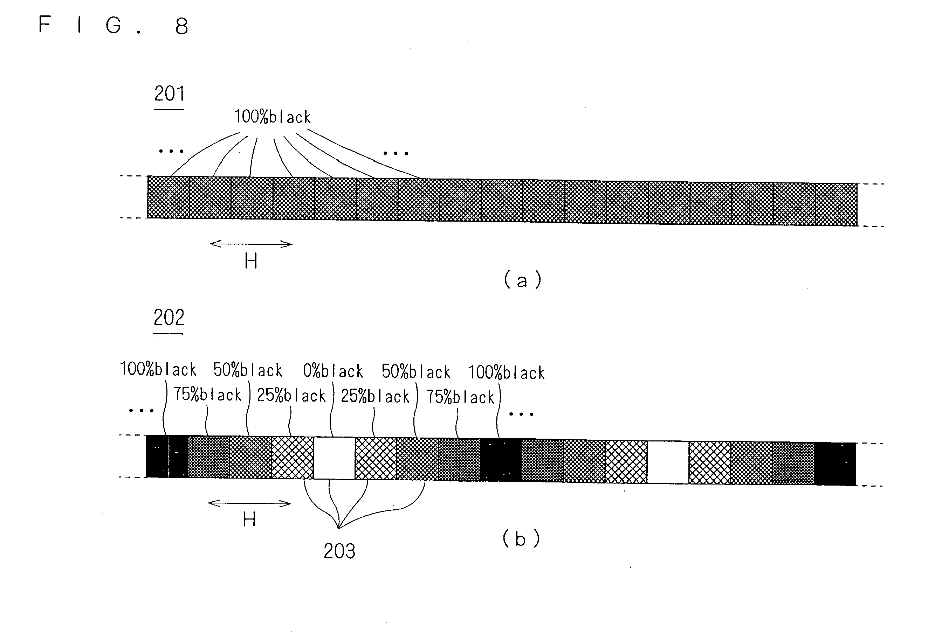

FIG. 8(a) is a diagram showing an image of a line segment before modification, and FIG. 8(b) is a diagram showing an image of the line segment after modification. In this way, a line segment that extends in the horizontal direction H may be set as the modification-target image element. In modification processing performed in such a case, the line segment is provided with at least one modification portion that extends in the horizontal direction H.

The following describes a specific example of modification processing in the exemplary case in which, as shown in FIG. 8(a), the background is 0% black (white), and a line segment 201 before modification is a continuous series of lightnesses that are 100% black in the horizontal direction H. In this case, as shown in FIG. 8(b), modification portions 203 have been provided at a plurality of locations in a line segment 202. In the modification portions 203, in the portions of the line segment 202 where the modification portions 203 were provided, as the line segment 202 extends in the horizontal direction H, the lightness of the line segment 202 changes in stages between 100% black, which is the lightness of the original line segment 201, and 0% black, which is the lightness of the background. In the modification portions 203 in the example shown in FIG. 8(b), as the line segment 202 extends in the horizontal direction H, the lightness of the line segment 202 changes in stages in the order of 75% black, 50% black, 25% black, 0% black, 25% black, 50% black, and 75% black. More specifically, in the example shown in FIG. 8(b), the entirety of the line segment 202 after modification becomes the modification portions 203 in which the lightness changes cyclically. As the line segment 202 extends in the horizontal direction H, the lightness of the line segment 202 changes in stages and cyclically, in the order of 100% black, 75% black, 50% black, 25% black, 0% black, 25% black, 50% black, 75% black, 100% black, 75% black, and so on.

The number of modification portions 203 provided in the line segment 202 is adjusted according to the horizontal direction H width of the line segment 201 before modification, the horizontal direction H width of the modification portions 203, and the like. For example, if the horizontal direction H width of the line segment 201 before modification is small, it is sufficient to provide only one modification portion 203.

Here, examples of a line segment targeted for modification include various image elements that extend linearly along the horizontal direction H, such as a hyphen symbol or a minus symbol, and a ruled line or straight line that extends in the horizontal direction H.

Modification processing such as is described above is performed based on setting data that specifies modification processing content, which is stored in the storage unit 24 or the like. The following describes a specific example of the content of the setting data, taking the example of the case in which modification processing is performed on a character image (font image) received as a character code. The setting data is, for example, stored in the storage unit 24 or the like in the form of a data file, and in the case of performing modification processing, is read by the conversion processing unit 22b and used in modification processing. The XML (Extensible Markup Language) format or the like is used as the data format of the setting data.

Examples of content specified by the setting data include <target font>, <target pt>, <longitudinal gap between modification portions>, <modification portion longitudinal width>, <modification portion lateral width>, and <non-altered portion width>. Here, <target font> indicates, among the fonts used in a general PC or the like, the font targeted for modification. In this case, it is possible for all fonts to be targeted for modification, and it is also possible for some fonts to be excluded from the modification-target fonts.

Also, <target pt> indicates the font size targeted for modification, and indicates that all font sizes greater than or equal to the font size described therein are targeted for modification. The reason that font sizes that are greater than or equal to a certain font size are targeted for modification is that when the font size is smaller than, for example, about 16 pt (point), an electromagnetic signal of a sufficient extent to enable reproduction of the display image is not readily to be generated, and therefore it is rarely useful to perform modification processing.

Also, <longitudinal gap between modification portions> is for specifying the gap 4 in the vertical direction V between adjacent modification portions 3 on the display screen shown in FIG. 4, and the gap 4 is specified by the value described therein. Also, <modification portion longitudinal width> is for specifying the width 5 of the modification portions 3 in the vertical direction on the display screen shown in FIG. 4, and the width 5 is specified by the value described therein. Also, <modification portion lateral width> is for specifying the width 6 of the modification portions 3 in the horizontal direction H on the display screen shown in FIG. 4, and the width 6 is specified by the value described therein. Also, <non-altered portion width> is for specifying the width 7 in the horizontal direction H of the main body portion 2a (non-altered portion) of an image element on the display screen shown in FIG. 4 to which the modification portions 3 are to be added, and the modification portions 3 are added if the width 7 of the main body portion 2a is greater than or equal to the value described therein. The reason that the modification portions 3 are not added if the width 7 of the main body portion 2a is not greater than or equal to a predetermined value is that a clear electromagnetic signal does not readily appear when the width 7 of the main body portion 2a is less than or equal to the predetermined value, and therefore it is rarely useful to add the modification portions 3.

Note that different values can be set for <target pt>, <longitudinal gap between modification portions>, and the like according to <target font>.

The following describes modification processing in the case of employing a so-called bitmap font system as the font system. In this case, the modification-target image element is specified by a character code (also including font-related data), and therefore an image element such as a character is once generated in the bitmap format based on the character code. Also, modification processing is performed on the image element in the bitmap format. The image element after modification processing is described as bitmap data, converted to an image signal, supplied to the display unit 15, and displayed thereby. The form of the post-modification character image and the like described as bitmap data is called a "CrypType font".

Next is a description of modification processing in the case in which a so-called outline font system is employed as the font system and the modification-target image element is specified by vector information. There are two possible methods of performing modification processing in this case. The first is a method in which a modification-target image element is generated in the bitmap format based on outline font vector information, and modification processing is performed on the generated image element. The other is a method in which modification portions are added to the outline font based on vector information thereof, and thereafter bitmap conversion is performed. Note that in the latter method, if a method of adding modification portions that corresponds to the vector information is described in the content of the setting data specifying modification processing, the modification portions can be added efficiently by using the vector information effectively.

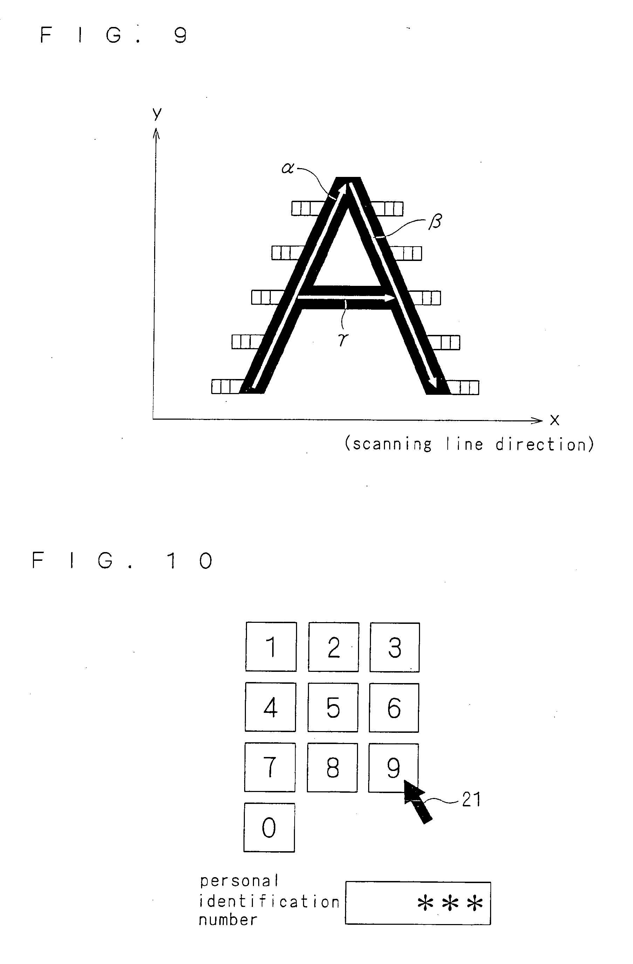

FIG. 9 is a schematic diagram for illustrating a method of adding modification portions with use of vector information. Vectors a, β, and γ indicate directions of lines constituting the character "A", using the x axis and the y axis as references. The x axis corresponds to the main-scanning line direction. The longitudinal direction and lateral direction in the description of the setting data specifying the modification processing correspond to the y axis and x axis respectively, and therefore positions where modification portions are to be added can be easily known from the vector directions. In particular, according to the vector information, it can be known that the vector γ matches the x axis direction, and therefore it is possible to omit adding modification portions to the vector γ. This is because in the portion of the line (line segment) that matches the x axis direction, changes do not appear in the voltage value of the RGB signal, and the emitted electromagnetic signal is weak, and therefore adding modification portions is rarely useful.

Note that in the case of a relatively long line segment that matches the x axis direction, the existence itself of the line segment generates an electromagnetic signal that allows reproducing the image, and therefore it is preferable to perform modification processing according to the above-described method shown in FIG. 8(b).

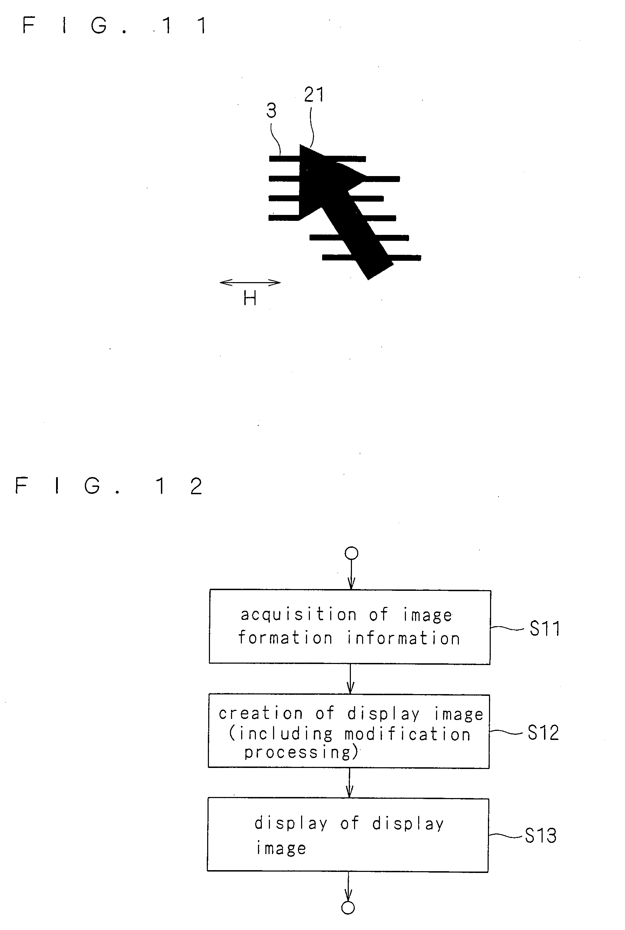

Also, a cursor image 21 shown in FIG. 10 is another example of an image element on which modification processing is performed. The cursor image 21 is a mouse cursor image that is moved within the screen 15a of the display unit 15 according to a mouse operation, and for example, a plurality of modification portions 3 have been added to the outline portion of the cursor image 21 as shown in FIG. 11. It is possible to prevent the position, movement, and the like of the mouse cursor displayed on the display unit from being detected by a third party based on an electromagnetic signal emitted from the electronic device 10.

For example, there are cases in which in a screen shown in FIG. 10 for inputting confidential information such as a personal identification number for online banking and the like, information is input by using a mouse to operate a numeric keypad that is displayed. In this case, the input information (a personal identification number or the like) is often displayed secretly with use of asterisks or the like (note that the input information may be displayed with use of the modified images (CrypType font) described above). However, even if input information is displayed secretly with use of asterisks or the like in this way, there is the risk of a third party detecting the content of the input information if the third party detects the position, movement, and the like of the cursor image 21 with respect to the image of the numeric keypad on the screen 15a based on a signal obtained by observing the electromagnetic signal.

In view of this, the present embodiment prevents the leakage of such input information by performing modification processing on the cursor image 21 as well, as described above. In the above description, modification processing is performed on the mouse cursor image 21, and it should be noted that modification processing may also be performed on key cursor images used for, for example, designating input positions on a keyboard. Also, in addition to the arrow-shaped graphic shown in FIG. 10, various images such as a triangle and the image of a human hand with a pointing finger may be employed as the mouse cursor image 21.

Although the above description takes the example of a case in which the modification processing involves altering a font character, altering can be similarly performed on a drawing line such as a straight line or a circle in addition to font characters. Also, a method of modifying a font and a drawing line was described as the method of performing modification processing, and various types of modification methods such as a method of performing modification on bitmaps and a method using outline font vector information were described as specific font modification methods. It was also described that in such modification methods, various modification parameters such as the point of characters targeted for modification and the modification portion lateral width are set.

These modification methods and modification parameters need not be applied uniformly to modification-target image elements. Instead, different modification methods and modification parameters may be applied irregularly for each modification-target image element or for each portion in an image element. This enables making estimating the image before modification even more difficult. Specifically, it is possible to apply a configuration in which, for example, the values of the modification parameters change according to the complexity of the character (e.g., the number of strokes in a character). Specifically, between a Japanese kanji and a Japanese hiragana, the Japanese kanji is more complex and is difficult to estimate even before modification. For this reason, in the case of a complex character such as a Japanese kanji, it is not necessary to add modification portions according to the same gap as a Japanese hiragana.

In the configuration described above, modification processing is performed on image elements that are specified by a character code or vector information, and as a result, bitmap data corresponding to the modified image element is created. This is therefore advantageous in that modification processing can be performed on arbitrary image elements specified by a character code or vector information.

Here, in the modification processing described above, for an image element on which modification processing has been performed once, information regarding the modified image element (e.g., bitmap data representing the modified image element) may be stored, and such stored information may be used in subsequent processing. In this case, if, for example, modification processing is to be performed on the same image element, information regarding the modification-target image element (information regarding a character code or the like) may be replaced with stored bitmap data representing the modified image element. This achieves performing modification processing speedily and efficiently.

Note that a primary storage area (e.g., a cache area) or the like is used for storing the storage information. Also, in order to suppress the size of the storage information, if the storage area for primary storage becomes full, if storage information that is no longer used is stored, or the like, a priority order may be set for the storage information, and storage information may be deleted in order beginning with the lowest priority. A so-called Garbage Collection technique is used as the technique performed in this case.

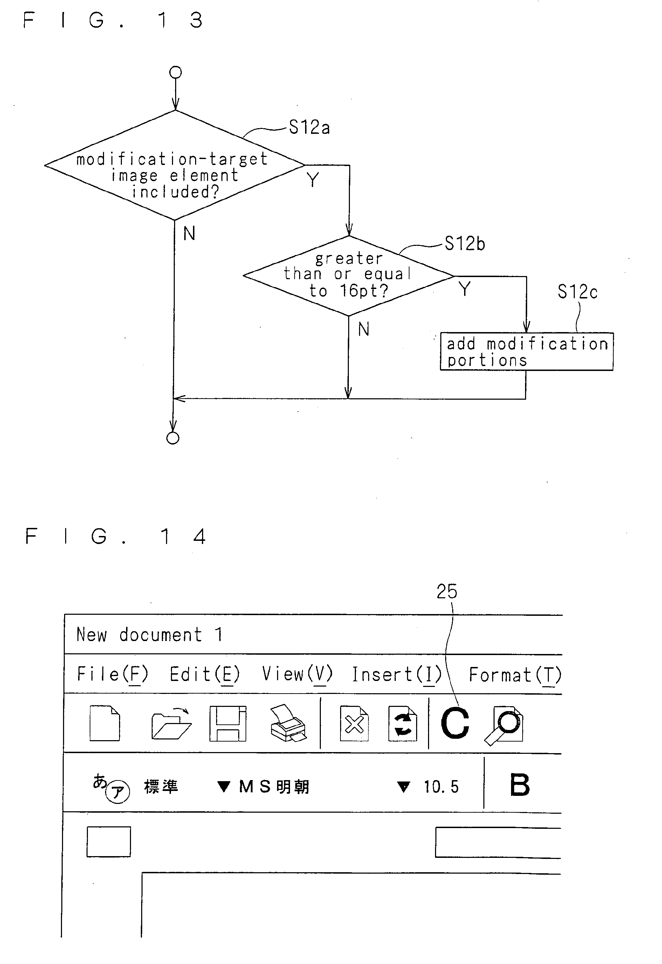

FIG. 12 is a flowchart showing operations of the electronic device according to the present embodiment, and FIG. 13 is a flowchart showing the details of operations related to modification processing performed by the electronic device.

As shown in FIG. 12, when the display control unit 11a of the control unit 11 in the electronic device 10 has acquired image formation information in step S11, processing proceeds to step S12 in which the display control unit 11a works in cooperation with the modification control unit 11b to create a display image based on the acquired image formation information. Examples of the thus created display image include a document creation image created using document creation software (word processing software), a screen for displaying or creating an email created using email software, a web screen, a screen created using schedule management software, and a display screen shown during use of so-called online banking. Other examples include a screen displayed for depositing, withdrawing, and bank transfers in the case in which the electronic device 10 is an ATM installed in a convenience store, the branch of a bank, or the like.

Note that in step S12, the display control unit 11a creates images for image elements that are not targeted for modification.

In the modification processing performed in step S12, as shown in FIG. 13, first the modification control unit 11b determines whether a modification-target image element is included in the display image created by the display control unit 11a (step S12a). Note that this modification processing function is turned on and off by, for example, using the mouse to click an icon 25 displayed in the display screen of the display unit 15 as shown in FIG. 14. For example, when the icon 25 is clicked once, the modification processing function is turned on, and the on state is maintained until the icon 25 is clicked again. Alternatively, the modification processing function may be turned on in response to a predetermined command included in the image formation information acquired in step S11.

If the modification processing function is turned on and furthermore it is determined that an image element on which modification is to be performed exists as a result of the determination in step S12a, a hook for modification processing is set, and processing proceeds to step S12b. On the other hand, if the modification processing function is turned off, or it has been determined that an image element on which modification processing is to be performed does not exist, processing proceeds to step S13 in FIG. 12 without setting a hook or performing modification processing.

Here, a hook is for causing control performed by a designated API (Application Program Interface) or function to be taken over by another API or function, and performed thereby instead of by the designated API or function. When the control performed by the other API or function invoked by the hook has ended, control returns to the original API or function. In the present embodiment, due to the setting of the hook, for example, control performed by an API that carries out control of the display control unit 11a is taken over by an API that carries out control of the modification control unit 11b. Alternatively, as a variation of this point, the control unit 11 may cause modification processing to be performed by an external program for modification processing (a program that is also called a filter).

In step S12b, for example, it is determined whether the size of a character or the like that is targeted for modification is, for example, 16 pt or greater, and if the size is 16 pt or greater, in step S12c modification portions are added to the image of the modification-target character or the like as described above, and thereafter processing proceeds to step S13 in FIG. 12. If the size is less than 16 pt, processing proceeds to step S13 in FIG. 12 without modification processing being performed on the character or the like.

In step S13, the display control unit 11a causes the display unit 15 to display a display image in which modification processing has been performed on the modification-tar get image element. At this time, for the image element on which modification processing has been performed, a modified image element is generated based on the bitmap data, and the modified image element is displayed on the display unit 15. Also, for an image element that is not targeted for modification, an image element (e.g., an image of a character represented by a normal font) is generated based on an information element of a character code or the like that specifies the image element, and the generated image element is displayed on the display unit 15.

Here, the modification control unit 11b of the electronic device 1 is a functional element (processing module) generated in the control unit 11 by a program (software) installed in the electronic device 10. For this reason, various electronic devices can be provided with the modification processing function by installing such a program. Note that reading of the program to the electronic device 10 is accomplished by, for example, a reading device (not shown) of the electronic device 10 reading the program from a recording medium such as a CDROM (Compact Disk Read Only Memory), or reading the program via the network 30. The read program is stored in the storage unit 14 or the like.

As set forth above, according to the present embodiment, the above-described modification processing is performed on modification-target image elements. This enables preventing the leakage of information related to a display image by electromagnetic wave noise (an electromagnetic signal) that occurs when a display image is displayed on the display unit 15 of the electronic device 10. For example, in the case where personal information, confidential information, and the like are included in a display image, it is possible to reliably prevent such information from being leaked through an electromagnetic signal emitted from the electronic device 10.

Also, as set forth above, one or a plurality of modification portions are added to a modification-target image element, thereby suppressing degradation in the viewability of the modified image element displayed on the display unit 15 of the electronic device 10, while effectively obscuring the image element such that restoration based on an electromagnetic signal is difficult. As a result, even if an electromagnetic signal emitted from the electronic device 10 in relation to an image signal is received by a third party, it is possible to prevent an image element on which modification processing was performed from being restored based on the received signal.

### Second Embodiment

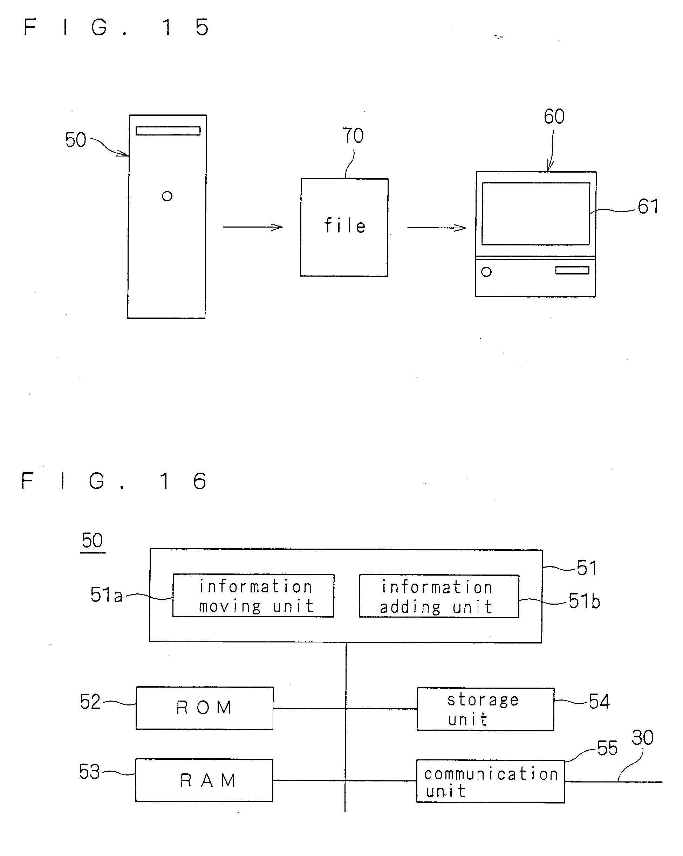

FIG. 15 is a diagram illustrating an information processing device according to a second embodiment of the present invention, and FIG. 16 is a block diagram of the information processing device.

In the present embodiment, as shown in FIG. 15, an information processing device 50 performs predetermined processing as described below on a file 70. This prevents the leakage of information through an electromagnetic signal when the file 70 is read to another electronic device 60 and the information included in the file 70 is displayed by a display unit 61 of the electronic device 60.

Various devices that perform information processing can be used as the information processing device 50. For example, a computer can be used as the information processing device 50. Also, the electronic device 60 includes a display unit 61, and a PC, a mobile phone terminal, a PDA (Personal Digital Assistants), a car navigation system, a TV and the like can be used as the electronic device 60. Another example is an ATM installed in a convenience store, the branch of a bank, or the like. Transfer of the file 70 between the information processing device 50 and the electronic device 60 is carried out by transmission via a transmission path such as the above-described network 30, or by using a recording medium such as a flexible disk. The file 70 may have various data content and file formats.

The information processing device 50 includes a control unit 51, a ROM 52, a RAM 53, a storage unit 54, and a communication unit 55 as shown in FIG. 16. Note that the configuration shown in FIG. 2 is an example, and the information processing device 50 may include a display unit, an operation unit and the like.

The control unit 51 performs overall control of the information processing device 50, and has a configuration including a CPU and the like. The control unit 51 includes an information moving unit 51a and an information adding unit 51b as functional elements. The roles of these functional elements are described later. The ROM 52 stores, for example, setting data and a basic program that the control unit 51 executes in order to perform information processing. The RAM 53 is used as, for example, a work area in order for the control unit 51 to perform information processing. The storage unit 54 is configured from a storage device whose storage content can be rewritten, such as a hard disk device, and is used as an information storage location. The storage unit 54 also stores information related to an operating system and various types of application software. The communication unit 55 is an interface in order for the information processing device 50 to transmit/receive information via the network 30.

Here, the file 70 targeted for processing performed by the information processing device 50 is assumed to include an information item including image formation information used for forming a display image (hereinafter, referred to as "document information item").

The information moving unit 51a of the control unit 51 moves at least a portion of the image formation information included in the document information item of the supplied file 70, from the document information item to an item in the file 70 that is other than the document information item or to a predetermined storage location outside the file 70. The information adding unit 51b adds, to the document information item of the file 70, alternate image formation information that can be processed with software capable of opening the file 70, in place of at least a portion of the image formation information that has been moved.

Here, the file 70 is described in a form in which the information included in that file 70 is structured. Accordingly, it is possible to include various information in the file 70, and allow various processing to be performed by the electronic device 60 to which the file 70 has been read, based on the information included in the file 70.

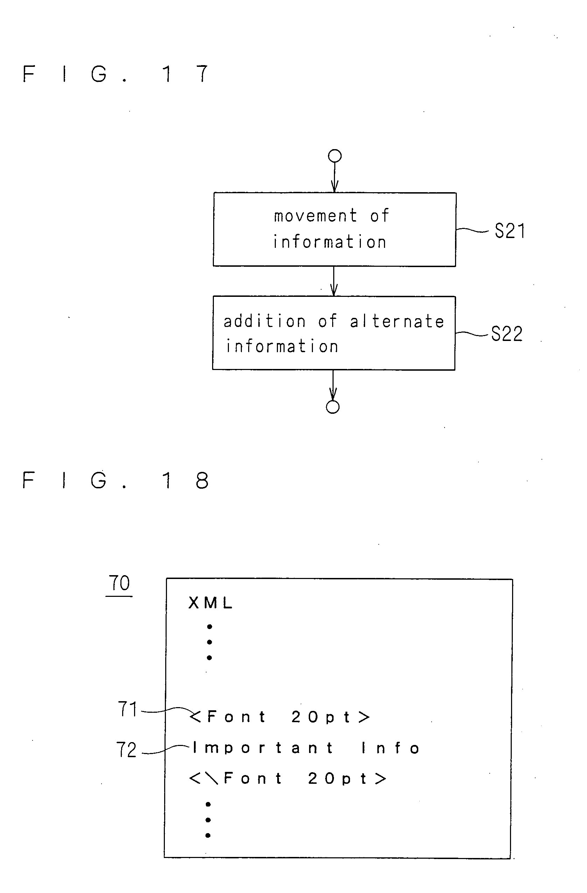

The following describes the further details of operations of the control unit 51 with reference to the flowchart shown in FIG. 17, and the like. In step S21 in FIG. 17, the information moving unit 51a of the control unit 51 performs information movement for a designated file 70.

Here, for example, an open document format, or Office Open XML for storing a document file created using office software (OpenOffice.org (registered trademark) may be employed as the format of the file 70. The file 70 is in a form in which an XML format text file and a binary file such as an image are integrated into one compressed file.

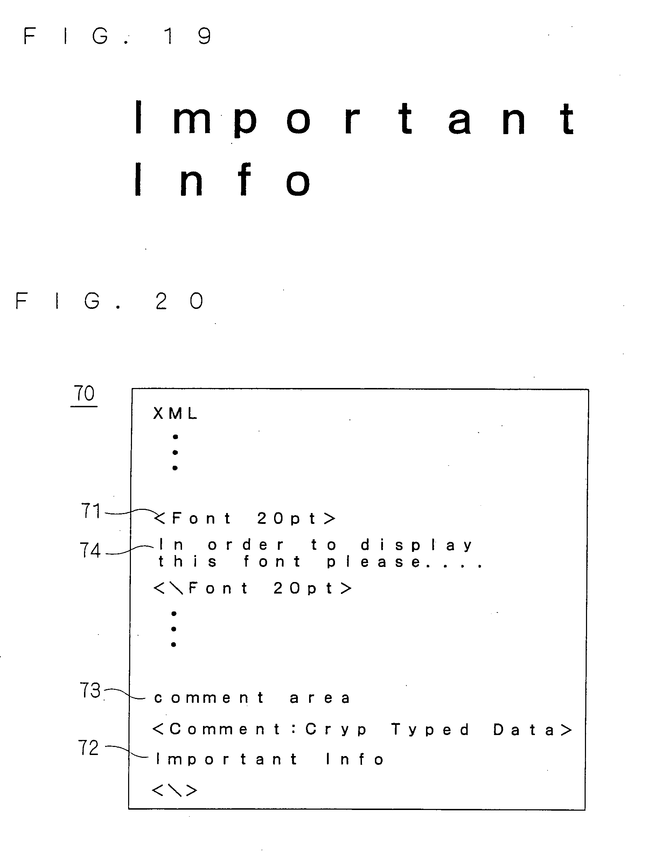

A document information item 71 (see FIG. 18) of the file 70 before being changed includes, for example, document data described using a normal font, as the image formation information. In the example shown in FIG. 18, the document data is described as <Font 20pt>Important Info<backslash Font 20pt>. When the file 70 is opened by the electronic device 60, the image "Important Info" with a font size of 20 is displayed on the display unit 61 in a normal font as shown in FIG. 19. In this case, there is the possibility that the information included in the display image of the display unit 61 may be leaked through an electromagnetic signal emitted from the electronic device 60.

For such a file 70, the information moving unit 51a moves the image formation information 72 included in the document information item 71 to an item in the file 70 that is other than the document information item 71 (e.g., a comment area 73 (see FIG. 20)). At this time, information related to the position where the image formation information 72 is described in the comment area 73 (meta-information) is also added to the comment area 73. Note that, in another configuration example, the information moving unit 51a may store the image formation information 72 in a predetermined storage location outside the file 70 (e.g., a data storage server).

In the subsequent step S22, the information adding unit 51b adds alternate image formation information 74 (see FIG. 20) to the document information item 71 in place of the image formation information 72 that has been moved. Note that the alternate image formation information 74 can be processed with software capable of opening the file 70 before changing. An example of the content of the alternate image formation information 74 is information or the like for displaying a predetermined message image when the file 70 is opened. In the example shown in FIG. 20, the document data "To display this font, please download CrypType Viewer from here" is added as the alternate image formation information 72. Note that in the portion "here" in the above document data, a link to the download site for software that performs display using a CrypType font is added.

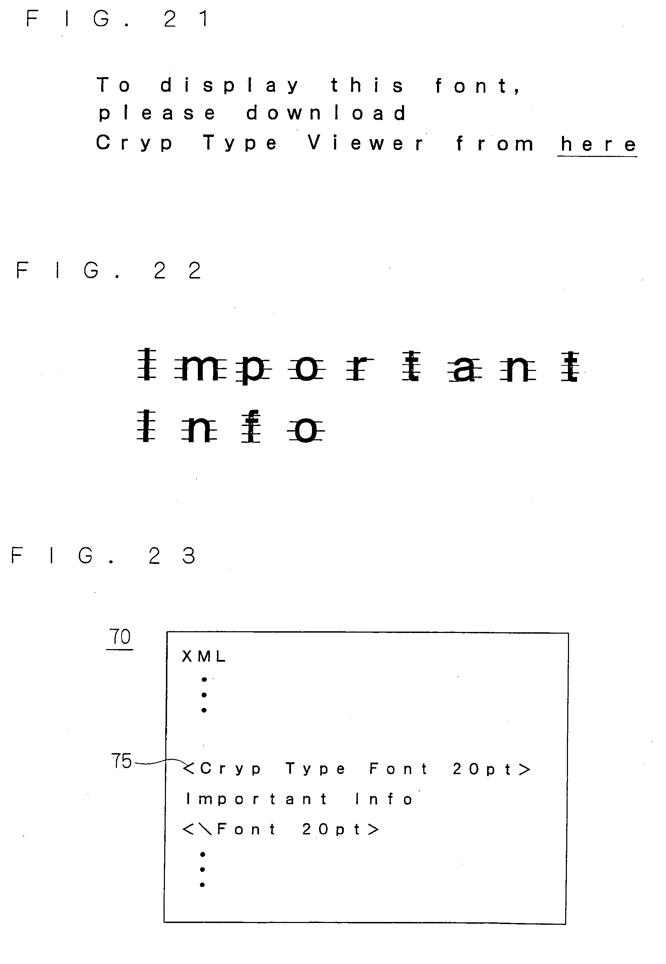

The loading of the file 70 on which such changing processing has been performed to another electronic device 60 is carried out by transmission via a transmission path such as the network 30, or by storing the file 70 in a recording medium such as a flexible disk. For example, when the file 70 shown in FIG. 20 is loaded to the electronic device 60 and is opened with predetermined software, an image that has been formed based on the alternate image formation information 74 included in the document information item 71 of the file 70 is displayed on the display unit 61. In this case, for example, an image as shown in FIG. 21 is displayed on the display unit 61. At this time, the image formation information 72 included in the document information item 70 in the file 70 before changing has been moved to another location, and therefore will not be displayed on the display unit 61.

A user of the electronic device 60 can know the fact that the content of the file 70 has been changed, the method of displaying the information of the change file 70 before changing, and the like, by viewing the display image (alternate image) on the display unit 61.

For example, according to the instructions in the display image shown in FIG. 21, the user can download software for performing the modification processing as in the above-described first embodiment on an image of a character or the like from a predetermined download site. Then, the user can cause that modification processing software to perform modification processing based on the image formation information 72 that has been moved to the comment area 73 of the file 70, and to cause the display unit 61 to display an image formed based on the image formation information 72 as a modified image that is free of concern of leakage through an electromagnetic signal, as shown in FIG. 22, for example.

At this time, it is preferable that the modification processing software and the software for opening the file 70 are linked with each other such that the modification processing software automatically reads the image formation information 72 from the comment area 73 of the file 70 and performs modification processing based on that information 72, and that the image after the modification processing is displayed on the display unit 70.

Alternatively, as an another example, a plug-in item 75 (see FIG. 23) for invoking the modification processing software may be added to the file 70, in addition to performing the movement of the image formation information 72 and the addition of the alternate image formation information 74. The addition of the plug-in item 75 is performed by the information adding unit 51b. With this configuration, when the file 70 to which the plug-in item 75 has been added is read to the electronic device 60, the modification processing software is invoked by the plug-in item 75, modification processing is performed based on the image formation information 72, and an image after modification processing is displayed. In this case, the image formation information 72 (document data) on which modification processing is to be performed and a modification processing condition (e.g., the size in which the image after modification processing is displayed) may be added to the plug-in item 75. Alternatively, the image formation information 72, the modification processing condition, and the like may not be added to the plug-in item 75, and the storage locations of these pieces of information may be described in the plug-in item 75 instead. For example, the image formation information 72 and information related to the modification processing condition may be stored in a server or the like on the network 30 in advance, and the electronic device 60 may obtain these pieces of information via the network 30 when performing modification processing.

Alternatively, as yet another example, modification processing may be performed by an external program, without using the above-described plug in.

As set forth above, according to the present embodiment, when confidential information or the like is included in the image formation information 72 included in the document information item 71 of the file 70, a portion of the image formation information 71 that corresponds to the confidential information, or the entirety of the image formation information 71 can be moved to an item in the file 70 that is other than the information item 71 or to a predetermined storage location outside the file 70. Accordingly, when the file 70 is loaded to another electronic device 60 and is displayed thereby, it is possible to prevent the leakage of information to a third party through an electromagnetic signal as a result of a display image including confidential information being displayed on the display unit 61 in a vulnerable state.

Furthermore, when the image formation information 72 has been moved from the document information item 71 of the file 70, the alternate image formation information 74 that can be processed with software capable of opening that file 70 is added to that information item 71. Also, in the electronic device 60 to which the file 70 has been read, an alternate display image that has been formed based on the alternate image formation information 74 is displayed on the display unit 61. Accordingly, it is possible to convey various information to the user and the like of the electronic device 60 by using the alternate display image. For example, it is possible to inform the user of the electronic device 60 of the fact that the content of the file 70 has been changed, or of a method of safely displaying the information contained in the file 70 before changing, while protecting that information from leakage, or the like.

The alternate image formation information 74 that is added to the document information item 71 of the file 70 in place of the moved image formation information 72 is information that can be processed with software capable of opening the file 70. Accordingly, special software need not be provided for opening the file 70 to which the alternate image formation information 74 has been added, which is convenient.

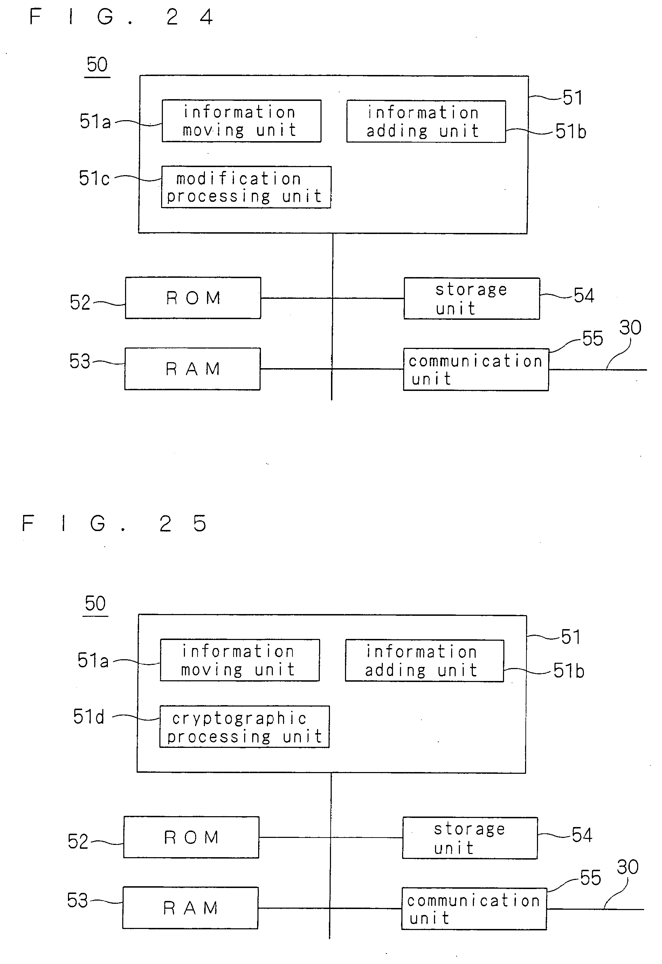

The following describes another variation of the information processing device 50 according to the present embodiment with reference to FIGS. 24 and 25.

In the variation shown in FIG. 24, the control unit 51 of the information processing device 50 is provided with a modification processing unit 51c that performs substantially the same modification processing as the modification control unit 11b of the electronic device 10 according to the above-described first embodiment.

The modification processing unit 51c performs substantially the same modification processing as in the case of the above-described first embodiment based on the image formation information 72 that has been moved from the document information item 71 of the file 70 by the information moving unit 51a. As a result, the modification processing unit 51c generates modified image information represented as bitmap data. Note that the image formation information 72 targeted for modification is assumed to have been specified by a character code or vector information.

Then, the information adding unit 51b adds the modified image information (bitmap data) supplied from the modification processing unit 51c to the document information item 71 of the file 70 as the above-described alternate image formation information 74.

When the file 70 after this change is opened by the electronic device 60, information included in the document information item 71 of the file 70 before changing is displayed on the display unit 61, for example, as a modified image as shown in FIG. 22. Accordingly, the file 70 including confidential information or the like can be distributed in a state in which the file 70 has been subjected to modification processing on the display image, and therefore, it is possible to reliably prevent information leakage through an electromagnetic signal when the file 70 is opened by the electronic device 60.

Furthermore, in the variation shown in FIG. 25, the control unit 51 of the information processing device 50 is provided with a cryptographic processing unit 51d that performs encryption of information. In this variation, the information moving unit 51a causes the cryptographic processing unit 51d to perform encryption on at least a portion of the part of the image formation information 71 that is targeted for movement and the relevant information thereof (e.g., information related to the destination of the image formation information 71). Then, after the encryption performed by the cryptographic processing unit 51d, the information moving unit 51a moves the part of the image formation information 72 that is targeted for movement, from the document information item 71 of the file 70 to an item in the file 70 that is other than the information item 71 or to a predetermined storage location outside the file 70.

A key for decrypting the encrypted information is supplied to the electronic device 60 separately from the file 70. The electronic device 60 decrypts the encrypted information using the key. Accordingly, it is possible to prevent the leakage of information as a result of image formation information 72 including confidential information or the like being intercepted by a third party.

In relation to the above-described configuration, a description was given of the method in which an XML open format is used as the format of the file 70, and the file 70 including confidential information or the like is safely transferred by programming for editing tags in that format, while protecting the file 70 against information leakage. However, the present invention is not limited configurations using such an open format. For example, for a closed format, it is also possible to perform programming such that a similar comment area 73 is provided. Besides these lines of format programming, it is also possible to perform programming such that a similar comment area 73 is provided in PostScript.

While structured files such as the above-described XML format and PostScript can be preferably used as the file 70 since editing thereof is relatively easy, the file 70 is not limited to structured files and any document file can be similarly edited. Furthermore, the technology according to the present invention is not limited to so-called document files (word processor files) and can be applied to any files in which information is stored, including, for example, a print/distribution files such as a PDF file, a presentation file, a spreadsheet file, a database file, a map file and a CAD file.

While information processing such as the modification processing on image elements and the changing processing on the file 70 are performed with software in each of the above-described embodiments, such processing may be performed using hardware. Alternatively, such software may be provided in the form of firmware, or embedded software or the like.
FIG. 1
   11a display control unit
   11b modification control unit
   14 storage unit
   15 display unit
   16 operation unit
   17 communication unit
FIG. 6(a), FIG. 6(b)
   emitted signal
FIG. 7(a)
   100% black
   50% black
   0% black
   1 dot
   3 dots
FIG. 7(b)
   100% black
   75% black
   50% black
   25% black
   0% black
   1 dot
   5 dots
FIG. 8(a)
   100% black
FIG. 8(b)
   100% black
   75% black
   50% black
   25% black
   0% black
   25% black
   50% black
   75% black
   100% black
FIG. 9
   (scanning line direction)
FIG. 10
   personal identification number
FIG. 12
   S11 acquisition of image formation information
   S12 creation of display image (including modification processing)
   S13 display of display image
FIG. 13
   S12a modification-target image element included?
   S12b greater than or equal to 16 pt?
   S12c add modification portions
FIG. 14
   New document 1 File (F)
   Edit (E)
   View (V)
   Insert (I)
   Format (T)
FIG. 16
   51a information moving unit
   51b information adding unit
   54 storage unit
   55 communication unit
FIG. 17
   S21 movement of information
   S22 addition of alternate information
FIG. 20
   74 In order to display this font, please....
   73 comment area
FIG. 21
   To display this font, please download CrypType Viewer from here
FIG. 24
   51a information moving unit
   51b information adding unit
   51c modification processing unit
   54 storage unit
   55 communication unit
FIG. 25
   51a information moving unit
   51b information adding unit
   51d cryptographic processing unit
   54 storage unit
   55 communication unit

The present application may also relate to an electronic device comprising:
a display unit;
a display control unit that forms a display image based on information, and causes the display unit to display the display image; and
a modification control unit that performs modification processing on a modification-target image element specified by a character code or vector information included in the information,
wherein the display control unit causes the display unit to display the display image after the modification processing has been performed on the modification-target image element by the modification control unit, and
the modification processing is processing that performs modification on an outline portion of the modification-target image element, or processing that replaces the modification-target image element with a preprovided modified image element in which the outline portion has been modified.

The processing that adds at least one modification portion to the outline portion of the modification-target image element, or processing that replaces the modification-target image element with a preprovided modified image element in which at least one modification portion has been added to the outline portion of the display image may be performed in the modification processing performed by the modification control unit, and
at least one of three attribute values consisting of hue, lightness and chroma of the modification portion may be gradually changed from an attribute value corresponding to the image element to which the modification portion is added, to an attribute value corresponding to a background image of the image element.

At least one of the three attribute values in the modification portion could be gradually changed in a horizontal direction that is the main-scanning direction of the display unit.

The modification portion could be added to the outline portion of the modification-target image element in a plurality of locations, and could have a substantially linear form extending along the horizontal direction of the display unit.

The modification-target image element may include a line segment extending in a horizontal direction that is the main-scanning direction of the display unit,
processing that provides the line segment with at least one modification portion extending in the horizontal direction, or processing that replaces the line segment with a preprovided modified line segment to which the at least one modification portion has been added may be performed in the modification processing performed by the modification control unit, and
in a part of the line segment at which the modification portion is provided, at least one of three attribute values consisting of hue, lightness and chroma of the line segment may be gradually changed from an attribute value corresponding to a part of the line segment at which the modification portion is not provided, to an attribute value corresponding to a background image of the line segment.

The modification control unit could form a bitmap image based on the character code or the vector information of the modification-target image element, and could perform the modification processing on the bitmap image.

The modification control unit could alternatively generate a bitmap format image element that has been subjected to the modification processing, based on the vector information of the modification-target image element.

The modification-target image element may be specified by a character code and data related to a font,
data related to at least one type of modified font corresponding to the modified image element may be pre-registered in the modification control unit, and
the modification control unit may replace the data related to the font of the modification-target image element with the data related to the modified font.

Information related to a plurality of types of modified fonts corresponding to font types of the modified image element could be pre-registered in the modification control unit in association with the font types of the modification-target image element, and
the modification control unit could select from among the plurality of types of modified fonts, a modified font associated with the font type of the modification-target image element, and could replace the data related to the font of the modification-target image element with data related to the selected modified font.

The modification-target image element may include a cursor image.

The cursor image could be a mouse cursor image.

The present application could also relate to an image modification method for modifying a display image displayed on a display unit of an electronic device, the method comprising the steps of:
performing modification processing on a modification-target image element specified by a character code or vector information included in a display image that is formed based on information; and
causing the display unit to display the display image after the modification processing has been performed on the modification-target image element,
wherein the modification processing is processing that performs modification on an outline portion of the modification-target image element, or processing that replaces the modification-target image element with a preprovided modified image element in which the outline portion has been modified.

Further, the present application may relate to an information processing device that performs processing on a file having an information item including image formation information used for forming a display image, the device comprising:
an information moving unit that moves at least a portion of the image formation information included in the information item of the file that is supplied, from the information item to an item included in the file other than the information item or to a predetermined storage location outside the file; and
an information adding unit that adds, to the information item of the file, alternate image formation information that can be processed using software capable of opening the file, in place of the at least a portion of the image formation information that has been moved.

The alternate image formation information could include information for causing an electronic device in which the software is installed to display a predetermined message image when the file is opened by the electronic device.

The information processing device could further comprise:
a modification processing unit that performs modification processing on a modification-target image element specified by a character code or vector information included in the image formation information,
wherein the modification processing is processing that performs modification on an outline portion of the modification-target image element, or processing that replaces the modification-target image element with a preprovided modified image element in which the outline portion has been modified, and
the information adding unit adds, to the information item of the file, modified information obtained by the modification processing performed on the modification-target image element by the modification processing unit as the alternate image formation information.

The information processing device may also further comprise:
a cryptographic processing unit that performs encryption of information,
wherein the information moving unit causes the cryptographic processing unit to perform encryption on at least a portion of a part of the image formation information that is targeted for movement before moving the part of the image formation information that is targeted for movement, from the information item to an item in the file that is other than the information item or to a predetermined storage location outside the file.

The information included in the file may be structured.

Furthermore, the present application may relate to an information processing method for performing processing on a file having an information item including image formation information used for forming a display image, the method comprising the steps of
moving at least a portion of the image formation information included in the information item of the file that is supplied, from the information item to an item in the file other than the information item or to a predetermined storage location outside the file; and
adding to the information item of the file, pre-defined alternate image formation information that can be processed using software capable of opening the file, in place of the at least a portion of the image formation information that has been moved.

Besides, the present application may relate to an image modification method for performing alteration on an information image in an electronic device including an image display device such that an electromagnetic signal correlated with the information image included in a display image displayed on a display screen of the image display device will not be emitted,
wherein a modification portion is added to an outline portion of the information image as the alteration.

The modification portion may be a linear gradation portion connecting a color of the information image and a background image color.

The modification portion could be added on at least one of both sides in the horizontal direction of the outline portion of the information image, with or without a predetermined gap in the vertical direction.

A horizontal direction width of the gradation portion in the modification portion could be changed.

## Claims

1. An information processing device that performs processing on a file having an information item including image formation information used for forming a display image, the device comprising:
an information moving unit (51 a) that moves at least a portion of the image formation information included in the information item of the file that is supplied, from the information item to an item included in the file other than the information item or to a predetermined storage location outside the file; and
an information adding unit (51 c) that adds, to the information item of the file, alternate image formation information that can be processed using software capable of opening the file, in place of the at least a portion of the image formation information that has been moved.

2. The information processing device according to claim 1,
wherein the alternate image formation information includes information for causing an electronic device in which the software is installed to display a predetermined message image when the file is opened by the electronic device.

3. The information processing device according to claim 1, further comprising:
a modification processing unit (51c) that replaces modificiation-target characters included in the image formation information with modified characters (2), the modified character is obtained by adding a plurality of whiskers (3) to the modification-target character, the whisker extends linearly along a horizontal direction (H),
wherein the information adding unit adds, to the information item of the file, the image formation information obtained by replacing the modification-target characters with the modified characters by the modification control unit.

4. The information processing device according to any of claims 1 to 3, further comprising:
a cryptographic processing unit (51 d) that performs encryption of information,
wherein the information moving unit causes the cryptographic processing unit to perform encryption on at least a portion of a part of the image formation information that is targeted for movement before moving the part of the image formation information that is targeted for movement, from the information item to an item in the file that is other than the information item or to a predetermined storage location outside the file.

5. The information processing device according to any of claims 1 to 4,
wherein information included in the file is structured.

6. An information processing method for performing processing on a file having an information item including image formation information used for forming a display image, the method comprising the steps of
moving at least a portion of the image formation information included in the information item of the file that is supplied, from the information item to an item in the file other than the information item or to a predetermined storage location outside the file; and
adding to the information item of the file, pre-defined alternate image formation information that can be processed using software capable of opening the file, in place of the at least a portion of the image formation information that has been moved.
